# EUROPEAN PATENT APPLICATION

(11) **EP 1 467 520 A1**
(43) Date of publication of application: **13.10.2004**
(21) Application number: 03701024.6
(22) Date of filing: 07.01.2003
(51) Int. Cl.: H04L 12/28

(54) **DEVICE CAPABLE OF PERFORMING RADIO COMMUNICATION**

(30) Priority: 17.01.2002 JP 2002008698
(71) Applicant: MATSUSHITA ELECTRIC INDUSTRIAL CO., LTD., Kadoma-shi, Osaka 571-0050 (JP)
(72) Inventor: RYUKAWA, Mika, Kawasaki-shi, Kanagawa 211-0025 (JP); ARISAWA, Ryuko, Yokohama-shi, Kanagawa 223-0056 (JP); TAKAGI, Masaki, Yokohama-shi, Kanagawa 223-0057 (JP)
(74) Representative: Grünecker, Kinkeldey, Stockmair & Schwanhäusser Anwaltssozietät
(86) International application number: PCT/JP2003/000045
(87) International publication number: WO 2003/061206

(57) **Abstract**

The present invention aims to provide a device permitting a device user to carry out a connecting process to other desired device and thus bringing the device into communicable state even though a very large number of devices exist within a connectable range.

Here is a schematic configuration of a part that is relevant to a radio communication of a device of the present invention. The device includes a radio portion 1, a controlling portion 2, a displaying portion 3, a sound outputting portion 4, a storing portion 5, and an operating portion 6. The radio portion 1 executes the transmission and reception of the data to and from other device by a radio wave. The controlling portion 2 executes the control of the overall radio communication containing the control of respective portions such as the radio portion 1, the displaying portion 3, the sound outputting portion 4, and so on. The controlling portion 2 outputs a signal indicating such effect when it detects the responses that exceed the number within which such responses from other devices can be processed properly.

## Description

### <Technical Field>

The present invention relates to a device capable of performing radio communication with a plurality of devices.

### <Background Art>

In the related art, data or sound exchange between devices is carried out by connecting the devices via the cables or by using the infrared communication. Whenever the data exchange is carried out by connecting the devices via the cables, the operation became troublesome in the small area such as the train, or the like and also private cables equipped with the connectors that can be connected to respective devices were needed. Also, in the data exchange using the infrared communication, such problems arose that an effective range is narrow such that a communicable distance is about several tens cm, the connection is not built up or broken off by influences of the outdoor daylight peculiar to the infrared ray, the physical cut-off, etc. Also, in the infrared communication, the communication could be held between the devices merely on a point-to-point basis.

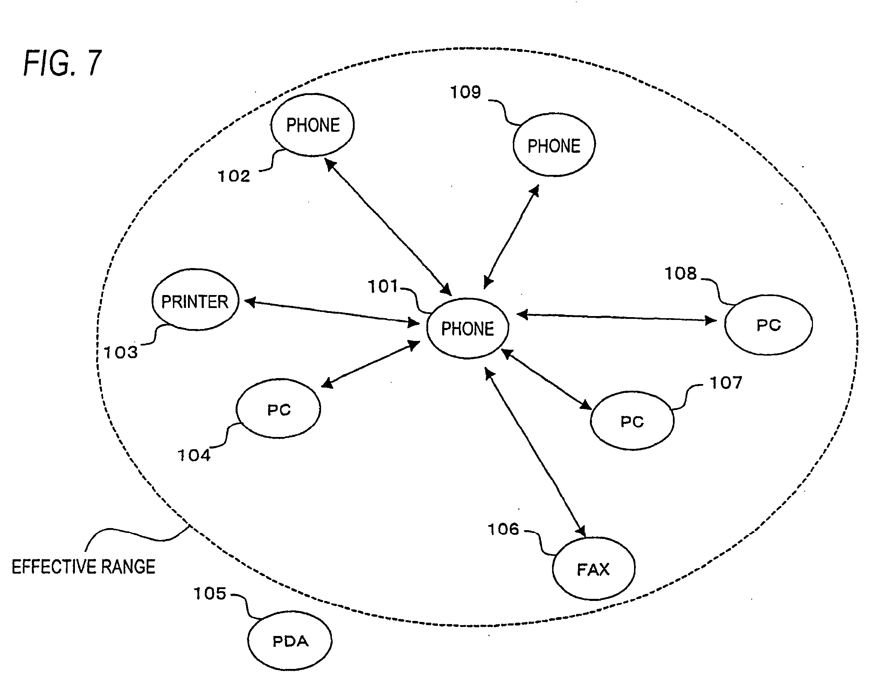

For this reason, the radio communication standard called Bluetooth that permits the user to exchange the data between the devices by radio on a point-to-multipoint basis was created. The communication using Bluetooth employs the frequency hopping system and is able to execute the radio communication whose maximum data transmission speed is 1 Mbps and whose maximum transmission distance is 100 m. This communication uses a frequency of 2.4 GHz in the ISM (Industrial Scientific Medical) band, and includes 79 channels each having a 1 MHz width, and switches the channel 1600 times for one second at its maximum. The devices into which Bluetooth is incorporated are classified into the device serving as a master that decides the frequency hopping pattern (referred to as the "master" hereinafter) and the device serving as a slave that follows the master (referred to as the "slave" hereinafter). The master can communicate with 7 slaves to the maximum. The radio communication network, which is built up between the master and a plurality of slaves, is called a piconet. An example of the piconet is illustrated in FIG.7. Suppose, as shown in FIG.7, that the devices such as PHONE 101, PHONE 102, PRINTER 103, PC 104, PDA 105, FAX 106, PC 107, PC 108, a phone 109, etc., which can execute the communication mutually based on Bluetooth, exist in a certain range. The piconet is established between the PHONE 101 and seven other devices except for the PDA 105 that is out of the communicable range when the PHONE 101 serves as the mater.

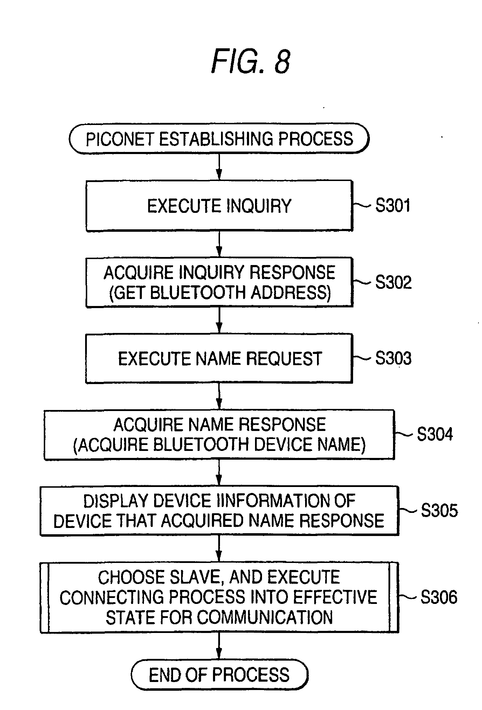

The piconet is established in compliance with a flow of a communication controlling process of the PHONE 101 as the master, as shown in FIG.8. First, a signal "Inquiry" is transmitted from the master (S301). The device that receives the signal transmitted from the master and is able to act as the slave transmits a signal "Inquiry Response" to the master. Thus, the master can get Bluetooth Device Address of Bluetooth that is incorporated into the device serving as the slave (S302). Then, the master transmits "Name Request" to the device serving as the slave (S303), and the slave when received this signal transmits a signal "Name Response". Thus, the master can know "Bluetooth Device Name" of the device serving as the slave, and can acquire the information of the device that can be chosen as the slave (S304). Then, the master displays the acquired device information (S305), and then executes a connecting process to the slave automatically or based on the user's choice (S306). Thus, the piconet shown in FIG.7 is set up via above procedures, whereby the master can communicate with the slave.

However, in the case where a very large number of devices that is able to serve as the slave are present in the connectable range of the master and these devices make a response respectively, in some cases the master cannot normally process the responses "Name Response" from the slave according to the performance of the mater. As a result, such a disadvantage sometimes exists that the user of the device serving as the master cannot catch the information of all devices in the connectable range and cannot communicate with the desired device.

Also, since the communication using Bluetooth permits the user to communicate with a plurality of devices, the user can know the "Bluetooth Device Name" of the device serving as the slave based on the "Name Response". However, it is not always simple for the user to choose precisely the desired device such as other devices that communicated with the master in the past in a short time and to set up the connection.

The present invention has been made to overcome the above problems, and it is an object of the present invention to provide a device that permits a user of the device to carry out a connecting process to other desired device and thus bring the device into its communicable state even though a very large number of devices exist within a connectable range. Also, it is another object of the present invention to provide a device capable of executing simply the connecting process to other devices with which the user communicated in the past.

### <Disclosure of the Invention>

A device of the present invention is capable of performing a radio communication with a plurality of other devices, which comprises a radio portion for holding short-distance radio communication with the other devices; and a controlling portion for executing a communication controlling process containing a connecting process to the other devices; wherein, when the controlling portion detects that responses from the other devices exceeds a number within which the device is able to process normally the responses, the controlling portion outputs a signal indicating the same. According to such signal, the user of the device can recognize the situation that a vary large number of other connectable devices are present in a communicable range and also can take a measure such as a request-to-reconnect instruction, or the like.

The device of the present invention further comprises a storing portion for storing device information data of the other devices that held communication with the device in the past; wherein the controlling portion executes the connecting process by utilizing the device information data. Therefore, the device can carry out the connecting process to other devices that exist in the communicable range with no trouble of the user of the device to come into its communicable state.

Also, in the device of the present invention, the device information data contain a nickname. Therefore, the user of the device can carry out the connecting process by utilizing the nickname, so that the choice of the device to be communicated can be facilitated.

Also, in the device of the present invention, the device information data contain a precedence. Therefore, the device can carry out the connecting process to other devices that exist in the communicable range in compliance with the precedence decided previously by the user of the device, and thus such device comes into its communicable state not to trouble the user of the device.

Also, in the device of the present invention, the short- distance radio communication is executed based on Bluetooth. The device can communicate with 7 devices at maximum by using the communication using Bluetooth.

### <Brief Description of the Drawings>

FIG.1 is a schematic configurative view of a part in connection with the radio communication of a device according to an embodiment of the present invention;
FIG.2 is a view explaining formation of a radio communication network using Bluetooth in the embodiment of the present invention;
FIG.3 is a view showing a flow of a piconet establishing process of a device in the embodiment of the present invention;
FIG.4 is a view showing a display of another device name, which returns a response, on a display portion of the device in the embodiment of the present invention;
FIG.5 is a view showing a display example of responses that are offered from other devices beyond the performance of the device in the embodiment of the present invention;
FIG.6 is a view showing a display example checking whether or not the request-to-reconnect is sent out from the device in the embodiment of the present invention;
FIG.7 is a view showing an example of a radio communication network using Bluetooth; and
FIG.8 is a view showing a flow of the piconet establishing process in the prior art.

In above Figures, a reference numeral 1 refers to a radio portion, 2 to a control portion, 3 to a display portion, 4 to a sound output portion, 5 to a storing portion, 6 to an operation portion, each of 101, 102, 109, 111 and 112 to a phone, 103 to a printer, each of 104, 107 and 108 to a PC, and each of 105 and 110 to PDA.

### <Best Mode for Carrying Out the Invention>

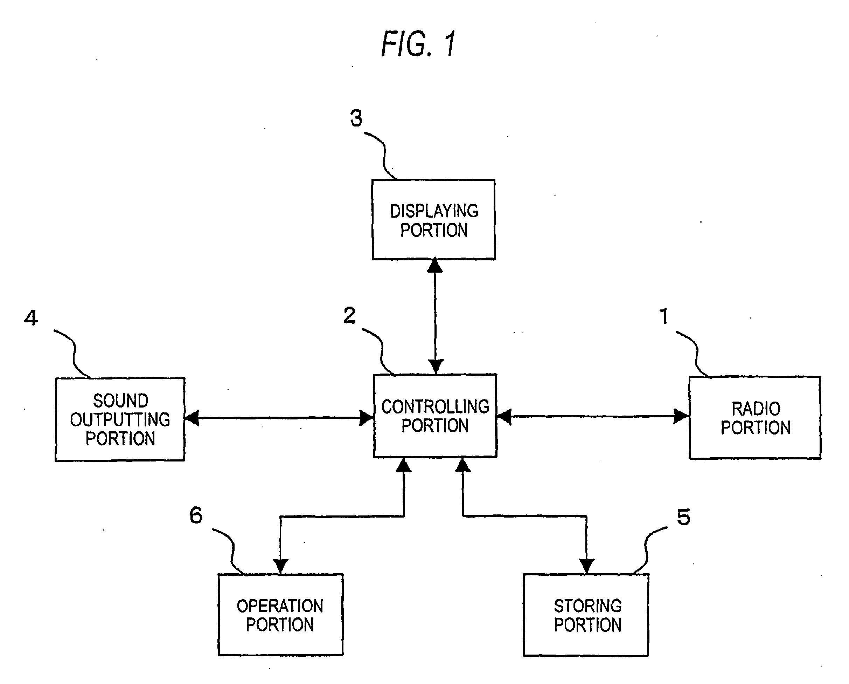

An embodiment of the present invention will be explained with reference to FIG.1 to FIG.6 hereinafter. FIG.1 shows a schematic configuration of a part that is relevant to a radio communication of a device according to an embodiment of the present invention. The device is constructed to include a radio portion 1, a controlling portion 2, a displaying portion 3, a sound outputting portion 4, a storing portion 5, and an operating portion 6. The radio portion 1 executes the transmission and reception of the data to and from other device by a radio wave. The controlling portion 2 executes the control of the overall radio communication containing the control of respective portions such as the radio portion 1, the displaying portion 3, the sound outputting portion 4, and so on. The displaying portion 3 executes the display of the communicable devices, etc. The sound outputting portion 4 executes the output of the sound. The storing portion 5 is such a portion that stores the data necessary for the operation of the device including the device information data of the device that communicated in the past. The operating portion 6 is such a portion that acts as the man-machine interface such as the key operation made by the user of the device, etc. In this case, the controlling portion 2, the displaying portion 3, the sound outputting portion 4, the storing portion 5, and the operating portion 6 may also be used as portions except the radio communication of the device.

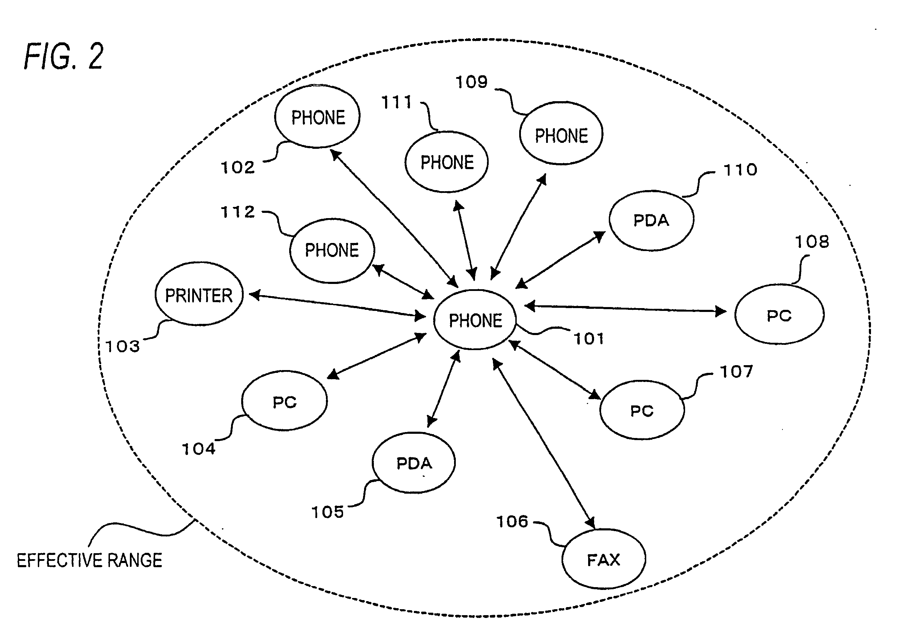

Then, explanation will be made hereinafter of the case where the device shown in FIG.1 executes the communication using Bluetooth. Now suppose that a PHONE 101, a PHONE 102, a PRINTER 103, a PC 104, a PDA 105, a FAX 106, a PC 107, a PC 108, a PHONE 109, a PDA 110, a PHONE 111, a PHONE 112, all of which can communicate based on Bluetooth, are located in positions shown in FIG.2 respectively. In the case where the PHONE 101 serves as the master, other devices exist within the radio-communicable range of the PHONE 101 and thus all the devices can serve as the slave. However, in the communication using Bluetooth, the number of the devices that can serve as the slave every master is limited to 7. Also, when the "Inquiry Response" signals are transmitted from the devices as the slave in response to the "Inquiry" signal transmitted from the device as the master, there is a limit to the number of the "Inquiry Response" signals that can be normally processed by the master. When the devices made the responses beyond the performance of the master, the controlling portion 2 of the PHONE 101 as the master displays such effect or outputs such effect by the sound, or the like. Here, suppose that the number of the responses that can be processed in the PHONE 101 as the master is set to 10.

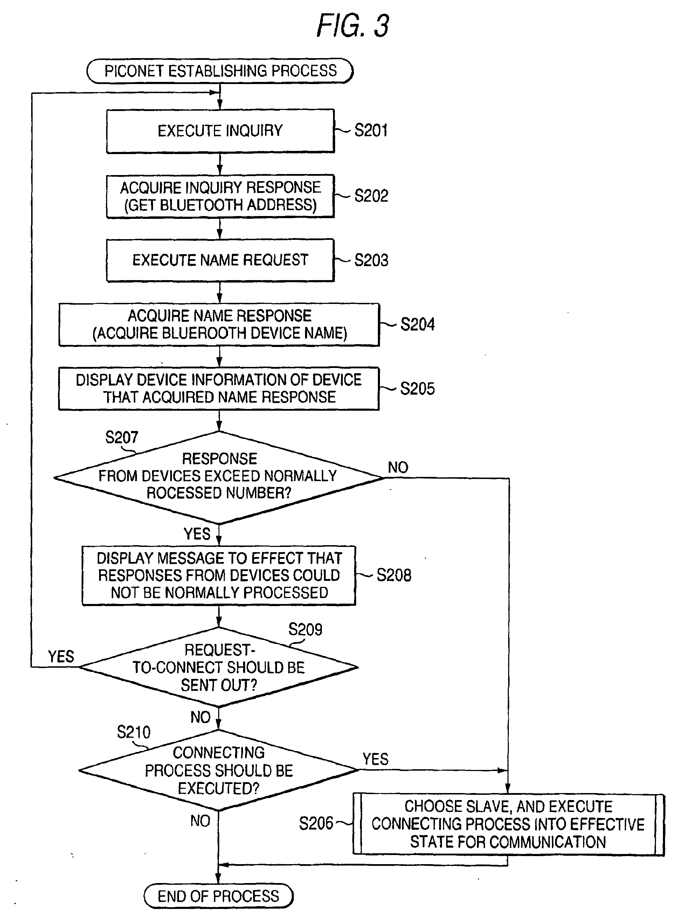

FIG.3 is a view showing a flow of a communication controlling process of the PHONE 101 as the master. In FIG.3, since steps from S201 to S204 correspond to steps from S301 to S304 in FIG.8, explanation of processes in steps S201 to S204 will be omitted herein.

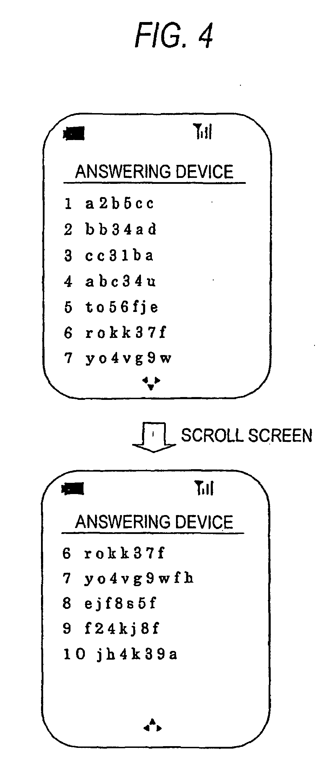

In step S205, Bluetooth Device Names acquired from the devices except for the PHONE 101 within the radio-communicable range are displayed. An example of the display is shown in FIG.4.

In step S207, it is decided whether or not the number of responses sent out from other devices exceeds the number 10 within which the response can be processed normally. Then, the process goes to step S206 if such number exceeds 10, while the process goes to step S208 if such number does not exceed 10.

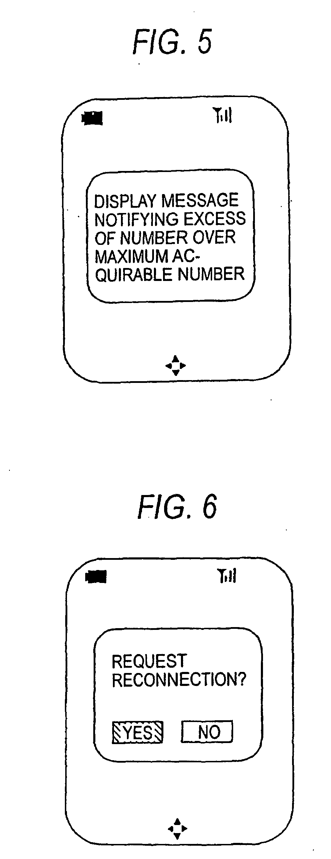

In step S208, if the number of acquired Bluetooth Device Names exceeds the number within which the response can be processed normally, the message to the effect that the number of responses exceeds the number within which the response can be processed normally is displayed, as shown in FIG.5, to inform the user of the device of such effect. Then, the process goes to next step S209. As a result, even though the desired device for communication is not displayed when the user looks at Bluetooth Device Names acquired in step S204, the user of the device can recognize a possibility that the device is contained.

In contrast, unless the number of acquired Names exceeds the number within which the response can be processed normally, the process goes to step S206. The connecting process executed in step S206 will be described later.

In step S209, the message is displayed on the screen as shown in FIG.6, and requests the user of the device to select whether or not the request-to-reconnect should be sent out. If the user can recognize based on the display shown in FIG.4 that the desired device for the communication is present, the request-to-reconnect is not needed. Therefore, the process goes to step S210 according to the choice of the user of the device.

If the desired device for the communication is not contained in the display in FIG.4 and thus the user of the device requests the request-to-reconnect, the process returns to step S201. Then, a series of procedures in step S201 et seq. are executed once again.

In step S210, the message indicating whether or not the connecting process should be executed is displayed, and requests the user of the device to choose. If the user wishes to communicate with any one of the displayed devices, the process goes to step S206 according to the choice. Unless the user wishes to communicate with the device, the connecting process is not executed. Then, a series of processes are ended.

In this case, in step S208, the output to the effect that the number of the acquired Bluetooth Device Names exceeds the number within which the responses can be processed may be executed by the sound.

Next, the connecting process executed in above step S207 will be explained hereunder. The connecting process executes processes such as the channel holding, etc. such that the master can communicate with the slave chosen by the device as the master or the slave chosen by the user of the device as the master. The user of the device may execute the choice of the slave by referring to the names of the answering devices shown in FIG.4. Also, the device as the master may execute the connecting process to seven devices based on a predetermined criterion, e.g., an answering order.

The device information data of other devices with which the device communicated in the past may be stored in the storing portion 5 of the device as the master, and then such device formation data may be utilized upon executing connecting process in step S206. The device information data are stored to correlate with Bluetooth Device Address or Bluetooth Device Name, and then the data may be utilized to decide whether or not the device corresponds to the devices that have communicated in the past after Name Response is acquired. One available method of the device information data is to apply a different display such as a reversing display, a blinking display, or the like to the devices that have communicated in the past, in the display of Bluetooth Device Names in FIG.4. When applying this display, it can be checked in a short time whether or not the devices that have communicated in the past are present, so that the choice of the device to be communicated can be further facilitated.

At that time, if nicknames given originally by the user of the device are contained in the device information data and then the device information data of the devices that have communicated in the past are displayed by the nicknames, the user of the device can appreciate easily to what type of the device the connecting process should be applied, so that the choice of the device can be further facilitated.

The device information data may be utilized to automatically choose the connected device. If the data are utilized in the automatic choice, precedence is affixed to the device information data respectively. The precedence may be stored automatically according to a connection frequency, or the like, or the user may set arbitrarily the precedence. When executing such connecting process, user's burden can be reduced.

The present invention is explained in detail with reference to the particular embodiment. But it is obvious for the person skilled in the art that various variations and modifications can be applied without departing from a spirit and a scope of the present invention.

The present application is filed based on Japanese Patent Application No.2002-008698 filed on January 17, 2002, and the contents thereof are incorporated hereinto by the reference.

### <Industrial Applicability>

As described above, the present invention can achieve such advantages that, since the signal indicating the effect is output when the responses from other devices that exceed the number within which the connecting process can be processed normally are detected, the user of the device can understand the situation that a vary large number of other connectable devices are present in the communicable range and also can take a measure such as the request-to-reconnect instruction, or the like. Also, the present invention can achieve such advantages that, since the connecting process is executed by utilizing the device information data of other devices that have communicated in the past, such connecting process to other devices that exist in the communicable range of the device can be carried out without the trouble of the user of the device to bring the device into its communicable state.

## Claims

1. A device capable of performing radio communication with a plurality of other devices, comprising:
a radio portion for holding short-distance radio communication with the other devices; and
a controlling portion for executing a communication controlling process containing a connecting process to the other devices,
wherein, when the controlling portion detects that the controlling portion detects that responses from the other devices exceeds a number within which the device is able to process normally the responses, the controlling portion outputs a signal indicating the same.

2. The device according to claim 1, further comprising:
a storing portion for storing device information data of the other devices that held communication with the device in the past,
wherein the controlling portion executes the connecting process by utilizing the device information data.

3. The device according to claim 2,
wherein the device information data include a nickname.

4. The device according to claim 2 or 3,
wherein the device information data include a precedence.

5. The device according to any one of claims 1 to 4,
wherein the short-distance radio communication is executed based on Bluetooth.
